# FASCICULE DE BREVET EUROPEEN

(11) **EP 4 000 054 B1**
(45) Date de publication et mention de la délivrance du brevet: **25.12.2024**
(21) Numéro de dépôt: 20742328.6
(22) Date de dépôt: 12.06.2020
(51) Int. Cl.: G08C 19/00, G08C 17/02

(54) **PROCÉDÉ ET DISPOSITIF DE COMMANDE SANS FIL POUR ACTIONNEURS COUPLÉS À UN RÉSEAU FILAIRE**
VERFAHREN UND VORRICHTUNG ZUR DRAHTLOSEN STEUERUNG VON MIT EINEM DRAHTGEBUNDENEN NETZWERK VERBUNDENEN AKTUATOREN
WIRELESS CONTROL METHOD AND DEVICE FOR ACTUATORS CONNECTED TO A WIRED NETWORK

(30) Priorité: 15.07.2019 FR 1907984
(43) Date de publication de la demande: 25.05.2022
(73) Titulaire: Somfy Activites SA, 74300 Cluses (FR)
(72) Inventeur: BRUET, Etienne, 74300 THYEZ (FR); BEAL, Franck, 74300 CHATILLON SUR CLUSES (FR); THIEBAUT, Joel, 74800 LA ROCHE SUR FORON (FR)
(74) Mandataire: Germain Maureau
(86) Numéro de dépôt international: PCT/FR2020/051003
(87) Numéro de publication internationale: WO 2021/009423

(56) Documents cités:
- WO-A1-03/092335
- CN-A- 109 631 102

## Description

La présente invention concerne un dispositif de commande à distance d'un actionneur pour un équipement mobile du bâtiment tel qu'un volet roulant, store ou rideau.

Il est connu d'utiliser un dispositif de commande comprenant un émetteur utilisant une fréquence radio pour émettre un signal de commande, et un récepteur de ladite fréquence, configuré pour recevoir ledit signal de commande, et pour traiter les données du signal reçu pour commander un actionneur et/ou régler un paramètre d'un actionneur en fonction des données du signal.

Un tel dispositif de commande connu permet notamment de réaliser la commande à distance, sans fil, et/ou le réglage à distance, sans fil, de paramètres de fonctionnement, d'un actionneur d'un équipement mobile du bâtiment, en particulier pour ouvrir ou fermer une porte, un portail, une fenêtre, un store, un écran de projection multimédia ou encore une trappe de ventilation.

Différents types de protocoles de communication sans fil existent qui permettent de réaliser une telle commande à distance, par exemple, des protocoles connus sous des noms de marques déposée, par exemple Bluetooth^{®} ou Bluetooth^{®} Low Energy (BLE). Le protocole de communication sans fil peut utiliser une technologie radiofréquence ou optique, comme le Lifi.

Un inconvénient des dispositifs connus de commande à distance sans fil basé sur des protocoles ouverts comme Bluetooth^{®} ou BLE, est d'être non sécurisé. Ces dispositifs de commande sont en outre basés sur une application accessible et téléchargeable librement à partir d'internet sur le dispositif de télécommande. Or, dans certaines applications, il n'est pas souhaitable qu'un utilisateur quelconque puisse accéder librement à certaines fonctions de réglages d'un actionneur. En effet, une utilisation inappropriée de certaines fonctions de réglages, peut être ensuite à l'origine d'interventions correctives de maintenance couteuses.

Il est également connu d'utiliser un réseau filaire pour transmettre, de manière sécurisé, un signal de commande ou de réglage à un ou plusieurs récepteurs configurés chacun pour recevoir ledit signal de commande, et pour traiter les données du signal reçu pour commander un actionneur, ou régler un ou plusieurs paramètres d'un actionneur, en fonction des données du signal, le ou les récepteurs étant raccordés au réseau filaire, le signal de commande étant émis sur le réseau filaire, d'une manière sécurisée, via une interface, de type clavier par exemple, raccordée au réseau filaire. Il est connu d'utiliser, par exemple, un câble Ethernet ou RS485 pour constituer ledit réseau filaire.

Dans certaines applications, l'utilisation du réseau filaire sécurisé pour la commande et/ou le réglage des actionneurs, nécessite d'accéder physiquement aux actionneurs, voire de déconnecter les actionneurs temporairement du réseau filaire. D'autre part, le réseau filaire de commande et de réglage des actionneurs ne permet parfois d'accéder qu'à certaines fonctions ou à certains réglages spécifiques.

Le document WO 03/092335 A1 divulgue un procédé pour commander un actionneur via un réseau filaire, l'actionneur comprenant un deuxième module de communication sans fil, mais ne divulgue pas un mécanisme d'activation à la demande du deuxième module de communication sans fil.

Le problème technique à résoudre est donc de permettre un accès spécifique, et à la demande, à des fonctions de réglages, en facilitant les interventions au niveau des actionneurs, tandis que les fonctions de commandes habituelles, destinées aux actionneurs réglés, sont émises et transmises aux actionneurs via le réseau filaire.

L'invention a donc pour but de proposer une solution à tout ou partie de ces problèmes.

A cet effet, la présente invention concerne un procédé pour commander au moins un actionneur, l'au moins un actionneur étant connecté via un réseau filaire à une unité de commande filaire configurée pour émettre des signaux de commande, ou de réglage, ou de réveil destinés à l'au moins un actionneur, l'au moins un actionneur comprenant un premier module de communication filaire, le premier module de communication filaire étant configuré pour communiquer avec l'unité de commande filaire via le réseau filaire, l'au moins un actionneur comprenant un deuxième module de communication, sans fil, le deuxième module de communication étant configuré pour être actif ou inactif, et un commutateur, connecté au deuxième module de communication, le procédé comprenant les étapes suivantes mises en oeuvre par l'actionneur:
- si le deuxième module de communication est inactif, activation du deuxième module de communication déclenchée par la réception d'un signal de réveil émis suite à une action sur le commutateur ou sur l'unité de commande filaire ou sur un autre élément du réseau de communication filaire, tel qu'un outil de configuration, disposant d'une interface réseau pour sa connexion au réseau de communication et raccordé au réseau de communication filaire;
- émission par l'actionneur d'un signal d'activité;
- réception par le deuxième module de communication d'un signal de connexion reçu en provenance d'un troisième module de communication d'un terminal mobile;
- établissement d'une connexion sans fil avec le terminal mobile;
- réception d'un signal de réglage de l'au moins un actionneur en provenance du terminal mobile.

Selon un mode de mise en oeuvre, l'invention comprend une ou plusieurs des caractéristiques suivantes, seules ou en combinaison techniquement acceptable.

Selon un mode de mise en oeuvre, l'action sur l'unité de commande filaire s'exerce directement sur l'unité de commande filaire, ou résulte d'une action sur un autre élément du réseau de communication filaire configuré pour communiquer avec l'unité de commande filaire.

Selon ces dispositions, il est possible d'avoir un accès sans fil aux réglages individuels de l'au moins un actionneur, réglages dont l'accès est, de manière nominale, disponible exclusivement à partir d'un outil de configuration filaire connecté au réseau filaire.

Selon un mode de mise en oeuvre, le procédé comprend une étape de déconnection de la connexion sans fil, et une étape de désactivation du deuxième module de communication, la désactivation étant déclenchée de préférence automatiquement après un délai prédéterminé à compter de la déconnection, ou par l'unité de commande filaire, ou par un autre élément du réseau de communication filaire configuré pour communiquer avec l'unité de commande filaire.

Selon ces dispositions, l'accès sans fil est limité aux utilisateurs autorisés détenteur d'un terminal mobile configuré pour établir une connexion sans fil avec les actionneurs et configuré pour activer le premier module de communication.

Selon un mode de mise en oeuvre, le procédé comprend les étapes suivantes mises en oeuvre par un terminal mobile comprenant un troisième module de communication, le troisième module de communication étant un module de communication sans fil:
- réception, par le troisième module de communication du terminal mobile, d'un signal d'activité émis par l'actionneur dont le deuxième module de communication est actif;
- émission par le troisième module de communication, d'un signal de connexion sans fil, pour établir une connexion sans fil avec le deuxième module de communication;
- émission par le terminal mobile d'un signal de réglage de l'au moins actionneur.

Selon un mode de mise en oeuvre, le terminal mobile peut comprendre une application logicielle configurée pour gérer la communication avec le deuxième module de communication.

Selon ces dispositions, le terminal mobile est apte à déterminer que le deuxième module de communication d'un actionneur est actif, grâce à la réception du signal d'activité émis par l'actionneur.

Selon un mode de mise en oeuvre, l'au moins un actionneur comprend au moins deux actionneurs, le procédé comprenant l'étape suivante :
- sélection sur le terminal mobile d'un actionneur parmi l'au moins deux actionneurs.

Selon un mode de mise en oeuvre, l'étape de sélection comprend une sous-étape de sélection d'un actionneur parmi les au moins deux actionneurs, l'actionneur étant sélectionné si le deuxième module de communication dudit actionneur est actif.

Selon un mode de mise en oeuvre, l'étape de sélection comprend une sous-étape de commande successive de chacun des actionneurs de l'au moins deux actionneurs pour sélectionner l'actionneur avec lequel une connexion sans fil est établie à l'étape d'émission d'un signal de connexion sans fil.

Selon un mode de mise en oeuvre, la sous-étape de sélection comprend une identification visuelle de l'actionneur parmi le ou les actionneurs successivement mis en mouvement par la commande successive de chacun des actionneurs 1.

Selon un mode de mise en oeuvre, l'étape de sélection comprend une étape de classement des actionneurs de l'au moins deux actionneurs selon un indicateur de proximité des actionneurs, l'indicateur de proximité étant déterminé par le troisième module de communication du terminal mobile avec le deuxième module de communication de chaque actionneur de l'au moins deux actionneurs.

Selon un autre aspect, l'invention concerne également un actionneur configuré pour recevoir une commande d'un terminal mobile, l'actionneur comprenant un premier module de communication filaire, le premier module de communication filaire étant configuré pour communiquer avec une unité de commande filaire via un réseau filaire, l'actionneur comprenant un deuxième module de communication, sans fil, le deuxième module de communication étant configuré pour être actif ou inactif, l'actionneur étant configuré pour activer le deuxième module de communication si le deuxième module de communication est inactif, l'activation du deuxième module de communication étant déclenchée par la réception d'un signal de réveil émis suite à une action sur le commutateur ou sur l'unité de commande filaire ou sur un autre élément du réseau de communication filaire, tel qu'un outil de configuration, disposant d'une interface réseau pour sa connexion au réseau de communication et raccordé au réseau de communication filaire, l'actionneur étant configuré pour émettre, lorsque le deuxième module de communication est actif, un signal d'activité, le deuxième module de communication actif étant en outre configuré pour établir une connexion sans fil, avec un terminal mobile muni d'un autre module de communication sans fil, le deuxième module de communication étant en outre configuré, lorsque la connexion sans fil avec le terminal mobile est établie, pour recevoir, en provenance du terminal mobile, un signal de réglage de l'actionneur.

Selon un mode de réalisation, cet autre aspect de l'invention comprend une ou plusieurs des caractéristiques suivantes, seules ou en combinaison techniquement acceptable.

Selon un mode de réalisation, l'actionneur comprend en outre un commutateur connecté au deuxième module de communication, le deuxième module de communication étant configuré, lorsqu'il est inactif, pour recevoir un signal de réveil et être actif après réception dudit signal de réveil, ledit signal de réveil étant reçu suite à une action sur le commutateur.

Selon encore un autre aspect, l'invention concerne également un ensemble comprenant au moins un actionneur selon l'un des modes de réalisation décrit ci-avant, et un terminal mobile configuré pour commander l'au moins un actionneur, le terminal mobile étant configuré pour recevoir le signal d'activité et pour établir une connexion sans fil avec le module de communication, sans fil, et lorsque la connexion sans fil avec le module de communication est établie, pour émettre un signal de réglage de l'actionneur.

Pour sa bonne compréhension, un mode de réalisation et/ou de mise en oeuvre de l'invention est décrit en référence aux dessins ci-annexés représentant, à titre d'exemple non limitatif, une forme de réalisation ou de mise en oeuvre respectivement d'un dispositif et/ou d'un procédé selon l'invention. Les mêmes références sur les dessins désignent des éléments similaires ou des éléments dont les fonctions sont similaires.
[Fig. 1] est une représentation simplifiée d'une installation domotique.
[Fig. 2] est une représentation simplifiée du dispositif.
[Fig. 3] est une représentation schématique des étapes du procédé selon l'invention.

Il existe de nombreux bâtiments pourvus d'équipements électriques commandables visant à assurer des fonctions de confort et de gestion d'énergie, comme le chauffage, la ventilation et la climatisation, mais aussi de gestion de l'éclairage et de pilotage des ouvrants, tels que des stores ou des volets roulants placés devant des fenêtres du bâtiment ou encore de la sécurisation à distance par contrôle de systèmes de fermetures (portes, serrures). Les automatismes sont les ensembles de règles qui régissent la commande des équipements électriques par un système de supervision programmable, afin d'assurer un meilleur confort des occupants du bâtiment ou encore d'optimiser la consommation d'énergie. Ces automatismes sont désignés sous le terme « Gestion Technique du Bâtiment » ou, plus généralement, sous l'expression « Building Automation Systems » en langue anglaise. Dans le résidentiel, les automatismes sont plus souvent désignés par le terme de « domotique ». Pour simplifier, par la suite, le terme domotique sera utilisé pour désigner autant des applications résidentielles que tertiaires.

Typiquement, les équipements d'un même bâtiment sont connectés à une unité de commande, qui a pour fonction de superviser ces équipements et d'en piloter le fonctionnement. Cette connexion est souvent réalisée en raccordant les équipements par des liaisons filaires dédiées. Par exemple, chaque équipement est connecté directement à l'unité de commande au moyen d'un ou plusieurs câbles, suivant une configuration maître/esclave.

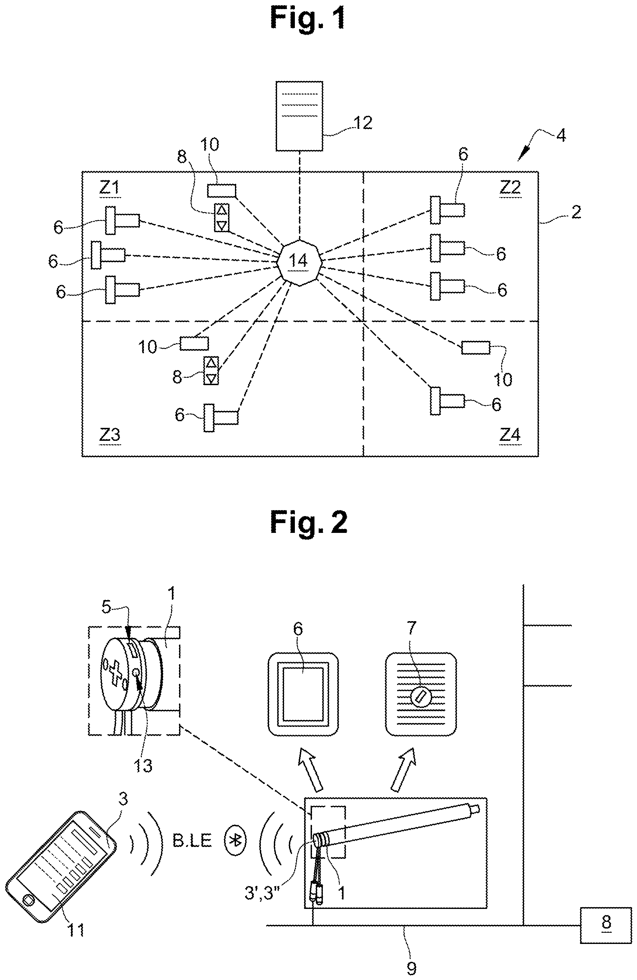

La figure 1 représente un bâtiment 2, comprenant plusieurs zones Z1, Z2, Z3, Z4. Le bâtiment 2 est équipé d'un système domotique 4 qui comporte un ensemble d'équipements domotiques répartis dans les zones du bâtiment 2, ainsi qu'un système de commande de ces équipements domotiques.

Le système domotique 4 est ici destiné à procurer des fonctions de confort et de gestion d'énergie du bâtiment 2, comme le chauffage, la ventilation et la climatisation, ainsi que des fonctions de gestion de l'éclairage et de pilotage des ouvrants, tels que des stores ou des volets roulants placés devant des fenêtres du bâtiment 2 et/ou des fonctions de sécurité comme la surveillance de locaux et l'alarme.

L'ensemble d'équipements domotiques comprend des équipements domotiques tels que des appareils domotiques commandables 6, des points de commande 8 et des capteurs 10, aptes à mettre en oeuvre les fonctions ci-dessus.

Le système de commande comporte notamment une unité de commande 12 programmable et un réseau de communication 14, interne au bâtiment 2, notamment un réseau de communication filaire, le réseau de communication 14 étant agencé pour permettre la communication des équipements domotiques du système domotique 4 entre eux et avec l'unité de commande 12. Les équipements domotiques du système domotique 4 qui sont connectés à ce réseau de communication 14 sont, dans ce qui suit, dits appartenir au réseau de communication 14.

Les équipements domotiques et le système de commande sont ici raccordés à une ou plusieurs sources d'alimentation électrique, non illustrée, du bâtiment 2.

Les zones du bâtiment 2 correspondent à des portions du bâtiment 2 qui sont situées à l'intérieur et/ou l'extérieur de ce bâtiment et qui sont destinées à recevoir chacune une partie des équipements domotiques du système domotique 4.

Le bâtiment 2 peut être un ensemble de bureaux, ou un bâtiment à usage d'habitation, ou un bâtiment à usage commercial ou industriel, ou toute combinaison de ces usages. Il peut notamment s'agir d'un immeuble ou d'une maison individuelle.

Ainsi, au sens de la présente description, le terme « domotique » n'est pas limité à un usage purement domestique et résidentiel.

Par exemple, des zones du bâtiment 2 correspondent à des niveaux du bâtiment 2, tels que des étages ou des sous-sols. Ces zones peuvent aussi être des pièces, des groupes de pièces du bâtiment 2, éventuellement séparées les unes des autres par des cloisons, ces pièces pouvant être réparties au sein d'un ou plusieurs niveaux du bâtiment 2.

Ces zones peuvent être délimitées de façon indépendante de la structure physique du bâtiment 2. Par exemple, une même pièce du bâtiment 2 peut comporter plusieurs zones. De telles zones peuvent également être situées à l'extérieur du bâtiment 2, par exemple lorsqu'elles correspondent à une façade ou une portion de façade du bâtiment 2. Ces zones peuvent également correspondre à des façades ou des parties de façade comme une partie de façade correspondant à un même étage.

Ces zones sont par exemple définies lors de la conception du bâtiment 2 et/ou lors de la conception et/ou l'installation du système domotique 4.

De préférence, les zones du bâtiment 2 sont distinctes les unes des autres. Toutefois, en variante, des zones du bâtiment 2 peuvent se recouper et/ou être imbriquées entre elles.

Dans cet exemple, seules quatre zones, ici notées Z1, Z2, Z3 et Z4, sont définies en référence au bâtiment 2. Toutefois, en pratique, ce nombre peut être différent. Il est notamment adapté en fonction de la configuration du bâtiment 2 et des fonctions du système domotique 4.

Pour simplifier la figure 1, les zones Z1, Z2, Z3 et Z4 sont illustrées de façon schématique à l'intérieur d'un même étage du bâtiment 2.

De préférence, chaque appareil domotique 6 commandable comporte un actionneur pilotable au moyen d'au moins un signal de commande.

Les appareils domotiques 6 sont ici illustrés de façon identique. Toutefois, ils peuvent présenter des différences entre eux et assurer des fonctions différentes au sein du système domotique 4.

Par exemple, l'actionneur de l'appareil 6 comprend un moteur électrique, l'actionneur agissant sur une charge mécanique et agencé pour déplacer et/ou régler un élément du bâtiment 2.

Selon un exemple, la charge mécanique de l'appareil 6 est un volet occultant, tel qu'un panneau, un store ou un rideau opaque, associé à au moins une ouverture du bâtiment 2, telle qu'une fenêtre ou une baie vitrée. Le déplacement de ce volet occultant permet de réguler la quantité d'ensoleillement reçue par le bâtiment 2 au travers de cette ouverture.

Selon un autre exemple, la charge mécanique de l'appareil 6 est un compresseur adapté pour mettre en oeuvre un cycle de détente-compression d'un fluide caloporteur au sein d'un système de réfrigération du bâtiment 2, tel qu'un climatiseur ou une pompe à chaleur, en vue de réguler la température à l'intérieur du bâtiment 2.

Selon encore un autre exemple, la charge mécanique de l'appareil 6 est une pompe ou un ventilateur destiné à mettre en mouvement un volume de fluide au sein du bâtiment 2, par exemple pour aspirer ou souffler de l'air au sein d'un système de ventilation, ou pour faire circuler de l'eau ou un fluide caloporteur au sein d'une conduite dédiée. La charge mécanique de l'appareil peut également être un radiateur.

L'actionneur de l'appareil domotique commandable 6 pour des fonctions de chauffage ou de climatisation est par exemple une vanne thermostatique.

En variante, l'actionneur de l'appareil 6 peut piloter un dispositif de commutation électrique, afin de commander l'allumage et l'extinction d'une source lumineuse, telle qu'une lampe au néon ou à diodes électroluminescentes, au sein du bâtiment 2.

L'appareil domotique commandable 6 peut également être un éclairage, par exemple, un éclairage intérieur, extérieur ou un système de commande d'éclairage, un système d'alarme, ou encore une caméra vidéo, en particulier une caméra de vidéosurveillance.

Un point de commande 8 est destiné à recevoir des instructions de pilotage de la part d'un utilisateur du bâtiment 2, en vue de piloter, directement ou indirectement, un ou plusieurs des appareils domotiques commandables 6 et/ou de piloter l'unité de commande 12.

A cet effet, chaque point de commande 8 comporte ici une interface homme-machine, non illustrée, comprenant des moyens d'entrée de données, tels qu'un ou plusieurs interrupteurs et/ou un ou plusieurs boutons poussoirs et/ou un ou plusieurs boutons rotatifs et/ou un écran tactile. Le point de commande 8 peut aussi comporter une interface de connexion pour y raccorder des moyens de commande externes, par exemple un ou plusieurs interrupteurs individuels disposés autour du point de commande 8 et étant raccordés par une liaison filaire à ce dernier.

L'interface homme-machine du point de commande 8 peut également comporter des moyens d'affichage, tels que des témoins lumineux et/ou un écran électronique, par exemple à cristaux liquides, pour afficher, à destination de l'utilisateur, des informations relatives au fonctionnement du système domotique 4 ou à des instructions saisies sur ladite interface homme-machine.

Les points de commande 8 peuvent se présenter sous la forme d'une télécommande portative associée à un récepteur fixe ou, en variante, d'un terminal de commande fixe solidarisé à un mur du bâtiment 2.

Là encore, les points de commande 8 sont ici illustrés de façon identique, mais ils peuvent présenter des différences entre eux et assurer des fonctions différentes au sein du système domotique 4.

Un capteur 10 est destiné à convertir une ou plusieurs grandeurs physiques relatives à l'état du bâtiment 2 ou de son environnement en un ou plusieurs signaux proportionnels à cette grandeur physique. Ce signal est, par exemple, un signal électrique, un signal lumineux ou un signal radiofréquence. Ce signal peut être transmis par le capteur à destination d'au moins un équipement domotique et/ou du système de commande, par exemple, l'unité de commande 12.

Un ou plusieurs capteurs 10, peuvent être intégrés à un appareil domotique commandable 6, à un point de commande 8 ou encore à l'unité de commande 12. L'installation domotique 4 peut également comprendre un ou plusieurs capteurs indépendants à ces éléments.

Par exemple, les grandeurs physiques mesurées par les capteurs 10 sont, de façon non limitative, une température, par exemple une température d'un mur ou de l'air ambiant, un taux d'humidité, une valeur de luminosité, d'intensité lumineuse ou de luminance, ou une pression de l'air ambiant, une vitesse et/ou une direction de vent, une valeur de consommation par exemple d'eau, de gaz ou d'électricité, l'état d'ouverture d'un volet roulant, la position d'un ouvrant tel une fenêtre, motorisée ou non ou encore la présence ou l'absence d'un utilisateur.

Là encore, les capteurs 10 sont ici illustrés de façon identique mais peuvent présenter des différences entre eux au sein du système domotique 4.

De manière générale, chaque équipement domotique comprend une interface qui lui permet de communiquer sur le réseau 14.

A titre d'exemple illustratif, sur la figure 1, la zone Z1 comporte trois appareils domotiques 6, un point de commande 8 et un capteur 10. La zone Z2 comporte trois appareils domotiques 6. La zone Z3 comporte un appareil domotique 6, un point de commande 8 et un capteur 10. La zone Z4 comporte un appareil domotique 6 et un capteur 10.

Par exemple, les trois appareils domotiques commandables 6 de la zone Z2 sont adaptés pour déplacer des volets occultants équipant des ouvertures du bâtiment 2 ménagées au niveau de cette zone Z2. Toujours dans cet exemple, les appareils domotiques 6 de la zone Z1 font ici partie d'un système de climatisation et de réfrigération de l'air circulant dans la zone Z1. Leur fonctionnement est régulé, par le biais de vannes thermostatiques commandables, en fonction d'ordres de pilotage reçus par le point de commande 8 et en fonction d'une température mesurée par le capteur 10 situés dans cette zone Z1.

Chaque équipement domotique du système domotique 4, dont notamment les appareils domotiques commandables 6, les points de commande 8 et les capteurs 10, est connecté à l'unité de commande 12 par l'intermédiaire du réseau de communications 14 et comporte à cet effet une interface réseau, décrite ci-après, pour se connecter à ce réseau de communications 14. L'unité de commande 12 comporte également une interface réseau non représentée sur la figure 1.

Par exemple, chaque appareil domotique 6 reçoit des signaux de commande par l'intermédiaire du réseau de communications 14. Chaque point de commande 8 transmet les instructions de pilotage reçues par l'intermédiaire du réseau de communications 14. Chaque capteur 10 envoie les informations mesurées par l'intermédiaire du réseau de communication 14.

La communication s'effectue selon un protocole de communication donné.

Cette communication s'effectue ici par un échange de messages, par exemple sous forme de paquets, ces messages contenant chacun au moins un en-tête, qui inclut une destination du message, et des données utiles, comme un ordre de commande ou une valeur de grandeur physique mesurée par un capteur. Le protocole de communication sur le réseau de communication 14 peut être unidirectionnel ou bidirectionnel.

Selon un mode de réalisation, représenté sur la figure 2, le procédé selon l'invention est configuré pour commander le réglage d'un ou plusieurs des actionneurs 1 des appareils domotiques 6 du système domotique 4. Chaque actionneur 1 est configuré pour recevoir des signaux de commande et/ou de réglage et exécuter les commandes ou réglages correspondants.

Un signal de commande ou de réglage peut être reçu au niveau de l'interface réseau d'un actionneur 1. Cette interface réseau comprend un premier module de communication filaire 3'; ainsi chaque actionneur 1 est connecté via ledit premier module de communication filaire 3' et le réseau de communication filaire 14 à une unité de commande filaire 8. L'unité de commande filaire 8 est configurée pour émettre des signaux de commande ou de réglage des différents actionneurs 1 via le réseau de communication filaire 14 et le premier module de communication filaire 3' de chaque actionneur 1.

Pour recevoir des signaux de commande ou de réglage, chaque actionneur 1 comprend également un deuxième module de communication 3", sans fil.

Le deuxième module de communication sans fil 3" de chaque actionneur est configuré pour être soit dans un mode dit actif soit dans un mode dit inactif; lorsque le deuxième module de communication sans fil 3" est dans le mode actif, le deuxième module de communication sans fil 3" est soumis à des alternances de veille courte et de périodes de réveil, de l'ordre de quelques millisecondes par exemple.

Parallèlement, le premier module de communication filaire 3' de chaque actionneur est configuré pour être dans un mode dit actif dans lequel il est soumis à des alternances de veille courte et de périodes de réveil de l'ordre de quelques millisecondes par exemple.

Dans le mode inactif, le deuxième module de communication sans fil 3" peut être totalement déconnecté tant qu'il ne reçoit pas un signal de réveil. Le premier module de communication filaire 3' reste actif, quel que soit l'état du deuxième module de communication sans fil 3" ; lorsque le deuxième module de communication sans fil 3" est inactif, le deuxième module de communication sans fil 3" est configuré pour recevoir un signal de réveil et devenir actif après réception dudit signal de réveil.

Ledit signal de réveil peut être émis par un commutateur 5 de l'actionneur 1, par exemple à la suite d'une action mécanique sur le commutateur 5, comme une pression sur un bouton du commutateur 5.

Ledit signal de réveil peut également être émis par l'unité de commande filaire 8, par exemple à la suite d'une action sur l'unité de commande filaire 8 ou encore à la suite d'une action sur un autre élément du réseau de communication filaire 14, comme par exemple un outil de configuration, non représenté sur la figure, disposant d'une interface réseau pour sa connexion au réseau de communication 14 et raccordé au réseau de communication filaire 14.

Lorsque le deuxième module de communication 3" est actif, l'actionneur 1 est configuré pour émettre un signal d'activité 13 indiquant qu'une liaison sans fil est disponible, et pour établir une connexion sans fil avec un terminal mobile 11, via le module de communication sans fil 3 du terminal mobile 11. Le terminal mobile 11 peut être un téléphone intelligent (ou smartphone en langue anglaise), une tablette ou un ordinateur portable.

Le signal d'activité peut être un signal émis par le deuxième module de communication 3" au moins lors de son passage à l'état actif. Le signal d'activité peut également comprendre un premier signal d'activité perceptible par un utilisateur et indiquant que le deuxième module de communication 3" est actif et un deuxième signal d'activité transmis par l'utilisateur au terminal mobile, notamment par le biais d'une interface homme-machine du terminal mobile.

Le deuxième module de communication 3" de l'actionneur 1 est en outre configuré pour recevoir, lorsque la connexion sans fil avec le terminal mobile 11 est établie, un signal de réglage de l'au moins un actionneur 1, en provenance du terminal mobile 11.

Selon ces dispositions, il est possible aux utilisateurs autorisés disposant d'un terminal mobile 11 configuré pour établir une connexion sans fil avec l'actionneur 1, de transmettre à l'actionneur 1, sans fil et sans intervention physique au niveau de l'actionneur 1, des signaux de réglages, et de réserver l'unité de commande filaire 8, plus sécurisée parce que reliée au réseau de communication, pour l'envoi, par les utilisateurs lambda, des signaux habituels de commande des actionneurs 1. Dans la mesure où la connexion sans fil n'est activée que sur requête particulière, par un utilisateur ayant accès au réseau de communication, il n'est pas nécessaire d'ajouter des fonctions de sécurisation supplémentaires, comme par exemple un mot de passe, pour sécuriser l'utilisation de la connexion sans fil.

Selon un aspect l'invention concerne un actionneur 1, ou un terminal mobile 11, configurés selon la description ci-avant. Selon un autre aspect, l'invention concerne également un ensemble comprenant un actionneur 1 et un terminal mobile, configurés selon la description ci-avant.

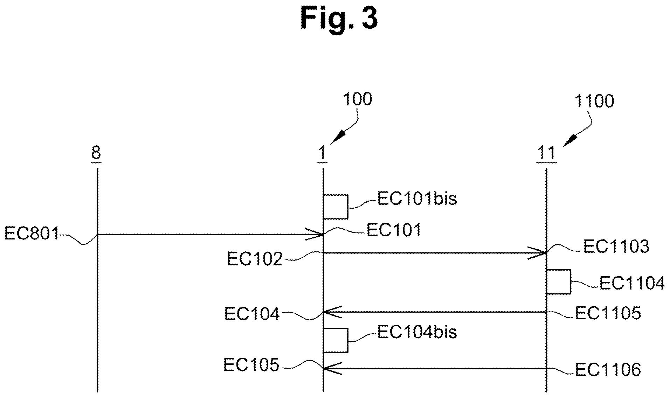

L'invention concerne également un procédé 100 pour commander un ou plusieurs actionneur(s)1, le ou les actionneur(s) 1 étant connecté(s) via un réseau filaire 14 à une unité de commande filaire 8 configurée pour émettre des signaux de commande ou de réglage destinées à le ou les actionneur(s) 1, le ou les actionneur(s) 1 comprenant un premier module de communication filaire 3' et un deuxième module de communication sans fil 3", le deuxième module de communication sans fil 3" étant configuré pour être actif ou inactif, et un commutateur 5, connecté au deuxième module de communication sans fil 3", le procédé 100 comprenant les étapes suivantes mises en oeuvre par le ou les actionneur(s) 1, comme cela est représenté schématiquement sur la figure 3 :
- si le deuxième module de communication sans fil 3" est inactif, réveil du deuxième module de communication 3", déclenchée par la réception EC101 d'un signal de réveil émis suite à une action EC101bis, EC801 sur le commutateur 5 ou sur l'unité de commande filaire 8, ou par une action sur un autre élément du réseau de communication filaire 14, comme par exemple un outil de configuration disposant d'une interface réseau pour sa connexion au réseau de communication 14 et raccordé au réseau de communication filaire 14;
- émission EC102 par le ou les actionneurs 1 d'un signal d'activité 13 de la liaison sans fil ;
- établissement EC104bis d'une connexion sans fil avec un terminal mobile 11, le terminal mobile comprenant un autre module 3 de communication sans fil, à la suite d'une réception EC104 par le deuxième module de communication sans fil 3" d'un signal de connexion émis par l'autre module de communication sans fil 3 du terminal mobile 11;
- réception EC105 d'un signal de réglage du ou des actionneur(s) 1 en provenance du terminal mobile 11.

Le procédé peut comprendre une étape de déconnection de la connexion sans fil, et une étape de désactivation du deuxième module de communication sans fil 3", ladite désactivation correspondant au passage d'un mode actif à un mode de veille prolongée ; ladite désactivation étant déclenchée de préférence automatiquement après un délai prédéterminé à compter de la déconnection, ou par un signal de désactivation émis par le terminal mobile 11, ou par l'unité de commande filaire 8 ou par l'outil de configuration raccordé au réseau de communication filaire 14.

L'invention concerne en outre un procédé 1100 pour commander un ou plusieurs actionneur(s) 1, le procédé 1100 comprenant les étapes suivantes mises en oeuvre par le terminal mobile 11 comme illustré schématiquement sur la figure 3:
- réception EC1103, par le module de communication 3 du terminal mobile 11, d'un signal d'activité 13 d'une liaison sans fil, émis par le ou les actionneur(s) 1 dont le deuxième module de communication sans fil 3" est actif ;
- émission EC1105 par le module de communication 3 du terminal mobile, d'un signal de connexion sans fil, pour établir une connexion sans fil avec le deuxième module de communication 3" du ou des actionneur(s) 1 ;
- émission EC1106 par le terminal mobile 11 d'un signal de réglage de l'au moins actionneur 1.

Lorsqu'il y a au moins deux actionneurs 1, le procédé 1100 peut comprendre une étape de sélection EC1104, par une action sur le terminal mobile 11, d'un actionneur 1 parmi l'au moins deux actionneurs, par exemple dans une liste d'actionneurs 1 dont le module de communication sans fil a été identifié par le terminal mobile comme actif, suite à la réception EC1103 d'un signal d'activité 13 en provenance du ou des actionneurs de ladite liste.

L'étape de sélection EC1104 peut comprendre une commande successive de chacun des actionneurs 1 pour identifier l'actionneur 1 avec lequel une connexion sans fil est ensuite établie, l'identification pouvant être visuelle, par exemple, si la commande successive de chacun des actionneurs 1 a pour effet de mettre en mouvement successivement chacun des actionneurs 1.

L'étape de sélection EC1104 peut également comprendre une étape de classement des actionneurs selon un indicateur de proximité des actionneurs, l'indicateur de proximité étant déterminé par le module de communication 3 du terminal mobile 11 avec le deuxième module de communication sans fil 3" de chaque actionneur, la sélection d'un actionneur 1 étant ensuite réalisée sur la base du classement des actionneurs 1, en sélectionnant par exemple le plus proche.

## Revendications

1. Procédé (100) pour commander au moins un actionneur (1), l'au moins un actionneur (1) étant connecté via un réseau filaire (14) à une unité de commande filaire (8) configurée pour émettre des signaux de commande, ou de réglage, ou de réveil destinés à l'au moins un actionneur (1), l'au moins un actionneur comprenant un premier module de communication filaire (3'), le premier module de communication filaire (3') étant configuré pour communiquer avec l'unité de commande filaire (8) via le réseau filaire (14), l'au moins un actionneur (1) comprenant un deuxième module de communication, sans fil, (3"), le deuxième module de communication (3") étant configuré pour être actif ou inactif, et un commutateur (5), connecté au deuxième module de communication (3"), le procédé comprenant les étapes suivantes mises en oeuvre par l'actionneur (1) :
- si le deuxième module de communication (3") est inactif, activation du deuxième module de communication (3") déclenchée par la réception (EC101) d'un signal de réveil émis suite à une action (EC101bis, EC801) sur le commutateur (5) ou sur l'unité de commande filaire (8) ou sur un autre élément du réseau de communication filaire (14), tel qu'un outil de configuration, disposant d'une interface réseau pour sa connexion au réseau de communication (14) et raccordé au réseau de communication filaire (14),
- émission (EC102) par l'actionneur (1) d'un signal d'activité;
- réception (EC104) par le deuxième module de communication (3") d'un signal de connexion reçu en provenance d'un troisième module de communication (3), sans fil, d'un terminal mobile (11);
- établissement (EC104bis) d'une connexion sans fil avec le terminal mobile (11);
- réception (EC105) d'un signal de réglage de l'au moins un actionneur (1) en provenance du terminal mobile (11).

2. Procédé (100) selon la revendication 1, **caractérisé en ce que** l'action (EC801) sur l'unité de commande filaire (8) s'exerce directement sur l'unité de commande filaire (8), ou résulte d'une action sur un autre élément du réseau de communication filaire (14) configuré pour communiquer avec l'unité de commande filaire (8)

3. Procédé (100) selon l'une des revendications 1 ou 2, le procédé comprenant les étapes suivantes mises en oeuvre par un terminal mobile (11) comprenant un troisième module de communication (3), le troisième module de communication (3) étant un module de communication sans fil:
- réception (EC1103), par le troisième module de communication (3) du terminal mobile (11), d'un signal d'activité émis par l'actionneur (1) dont le deuxième module de communication (3") est actif ;
- émission (EC1105) par le troisième module de communication (3), d'un signal de connexion sans fil, pour établir une connexion sans fil avec le deuxième module de communication (3") ;
- émission (EC1106) par le terminal mobile (11) d'un signal de réglage de l'au moins actionneur (1).

4. Procédé (100) selon la revendication 3, dans lequel l'au moins un actionneur (1) comprend au moins deux actionneurs, le procédé comprenant l'étape suivante :
- sélection (EC1104) sur le terminal mobile (11) d'un actionneur (1) parmi l'au moins deux actionneurs.

5. Procédé (100) selon la revendication 4, dans lequel l'étape de sélection (EC1104) comprend une sous-étape de sélection d'un actionneur parmi les au moins deux actionneurs, l'actionneur étant sélectionné si le deuxième module de communication (3") dudit actionneur est actif.

6. Procédé (100) selon la revendication 4, dans lequel l'étape de sélection (EC1104) comprend une sous-étape de commande successive de chacun des actionneurs de l'au moins deux actionneurs pour sélectionner l'actionneur avec lequel une connexion sans fil est établie à l'étape d'émission (EC1105) d'un signal de connexion sans fil.

7. Procédé (100) selon la revendication 4, dans lequel l'étape de sélection (EC1104) comprend une étape de classement des actionneurs de l'au moins deux actionneurs selon un indicateur de proximité des actionneurs, l'indicateur de proximité étant déterminé par le troisième module de communication (3) du terminal mobile (11) avec le deuxième module de communication (3") de chaque actionneur de l'au moins deux actionneurs.

8. Actionneur (1) configuré pour recevoir une commande d'un terminal mobile (11), l'actionneur (1) comprenant un premier module de communication filaire (3'), le premier module de communication filaire (3') étant configuré pour communiquer avec une unité de commande filaire (8) via un réseau filaire (14), l'actionneur (1) comprenant un deuxième module de communication, sans fil, (3"), le deuxième module de communication (3") étant configuré pour être actif ou inactif, l'actionneur (1) étant configuré pour activer le deuxième module de communication (3") si le deuxième module de communication (3") est inactif, l'activation du deuxième module de communication (3") étant déclenchée par la réception (EC101) d'un signal de réveil émis suite à une action (EC101bis, EC801) sur le commutateur (5) ou sur l'unité de commande filaire (8) ou sur un autre élément du réseau de communication filaire (14), tel qu'un outil de configuration, disposant d'une interface réseau pour sa connexion au réseau de communication (14) et raccordé au réseau de communication filaire (14), l'actionneur (1) étant configuré pour émettre (EC102), lorsque le deuxième module de communication (3") est actif, un signal d'activité (13), le deuxième module de communication (3") actif étant en outre configuré pour établir une connexion sans fil, avec un terminal mobile (11) muni d'un autre module de communication sans fil (3), le deuxième module de communication (3") étant en outre configuré, lorsque la connexion sans fil avec le terminal mobile (11) est établie, pour recevoir, en provenance du terminal mobile (11), un signal de réglage de l'actionneur (1).

9. Actionneur (1) selon la revendication précédente, l'actionneur (1) comprenant en outre un commutateur (5) connecté au deuxième module de communication (3"), le deuxième module de communication (3") étant configuré, lorsqu'il est inactif, pour recevoir un signal de réveil et être actif après réception dudit signal de réveil, ledit signal de réveil étant reçu suite à une action (EC101) sur le commutateur (5).

10. Ensemble comprenant au moins un actionneur (1) selon l'une des revendications 8 ou 9, et un terminal mobile (11) configuré pour commander l'au moins un actionneur (1), le terminal mobile (11) étant configuré pour recevoir le signal d'activité (13) et pour établir une connexion sans fil avec le module de communication, sans fil, (3"), et lorsque la connexion sans fil avec le module de communication (3") est établie, pour émettre un signal de réglage de l'au moins un actionneur (1).

## Patentansprüche

1. Verfahren (100) zum Steuern mindestens eines Aktors (1), wobei der mindestens eine Aktor (1) über ein drahtgebundenes Netzwerk (14) mit einer drahtgebundenen Steuereinheit (8) verbunden ist, die dazu konfiguriert ist, Steuer- oder Einstell- oder Wecksignale zu senden, die für den mindestens einen Aktor (1) bestimmt sind, wobei der mindestens eine Aktor ein erstes drahtgebundenes Kommunikationsmodul (3') umfasst, wobei das erste drahtgebundene Kommunikationsmodul (3') dazu konfiguriert ist, über das drahtgebundene Netzwerk (14) mit der drahtgebundenen Steuereinheit (8) zu kommunizieren, wobei der mindestens eine Aktor (1) ein zweites drahtloses Kommunikationsmodul (3") umfasst, wobei das zweite Kommunikationsmodul (3") dazu konfiguriert ist, aktiv oder inaktiv zu sein, und einen Schalter (5), der mit dem zweiten Kommunikationsmodul (3") verbunden ist, wobei das Verfahren die folgenden Schritte umfasst, die durch den Aktor (1) implementiert werden:
- wenn das zweite Kommunikationsmodul (3") inaktiv ist, Aktivieren des zweiten Kommunikationsmoduls (3"), ausgelöst durch das Empfangen (EC101) eines Wecksignals, das nach einer Aktion (EC101bis, EC801) am Schalter (5) oder an der kabelgebundenen Steuereinheit (8) oder an einem anderen Element des kabelgebundenen Kommunikationsnetzwerks (14), wie z. B. einem Konfigurationstool, das mit einer Netzwerkschnittstelle für seinen Anschluss an das Kommunikationsnetzwerk (14) versehen und an das drahtgebundene Kommunikationsnetzwerk (14) angeschlossen ist, gesendet wird,
- Senden (EC102) eines Aktivitätssignals durch den Aktor (1);
- Empfangen (EC104) eines Verbindungssignals, das von einem dritten drahtlosen Kommunikationsmodul (3) eines mobilen Endgeräts (11) empfangen wurde, durch das zweite Kommunikationsmodul (3");
- Herstellen (EC104bis) einer drahtlosen Verbindung mit dem mobilen Endgerät (11);
- Empfangen (EC105) eines vom mobilen Endgerät (11) kommenden Einstellsignals für den mindestens einen Aktor (1).

2. Verfahren (100) nach Anspruch 1, **dadurch gekennzeichnet, dass** die Aktion (EC801) auf die kabelgebundene Steuereinheit (8) direkt auf die kabelgebundene Steuereinheit (8) ausgeübt wird oder aus einer Aktion auf ein anderes Element des kabelgebundenen Kommunikationsnetzwerks (14) resultiert, das dazu konfiguriert ist, mit der kabelgebundenen Steuereinheit (8) zu kommunizieren.

3. Verfahren (100) nach einem der Ansprüche 1 oder 2, wobei das Verfahren die folgenden Schritte umfasst, die von einem mobilen Endgerät (11) implementiert werden, das ein drittes Kommunikationsmodul (3) umfasst, wobei das dritte Kommunikationsmodul (3) ein drahtloses Kommunikationsmodul ist:
- Empfangen (EC1103) eines Aktivitätssignals, das von dem Aktor (1) gesendet wird, dessen zweites Kommunikationsmodul (3") aktiv ist, durch das dritte Kommunikationsmodul (3) des mobilen Endgeräts (11);
- Senden (EC1105) eines drahtlosen Verbindungssignals durch das dritte Kommunikationsmodul (3), um eine drahtlose Verbindung mit dem zweiten Kommunikationsmodul (3") herzustellen;
- Senden (EC1106) eines Einstellsignals für den mindestens einen Aktor (1) durch das mobile Endgerät (11).

4. Verfahren (100) nach Anspruch 3, wobei der mindestens eine Aktor (1) mindestens zwei Aktoren umfasst, wobei das Verfahren den folgenden Schritt umfasst:
- Auswählen (EC1104) eines Aktors (1) unter den mindestens zwei Aktoren auf dem mobilen Endgerät (11).

5. Verfahren (100) nach Anspruch 4, wobei der Schritt des Auswählens (EC1104) einen Unterschritt des Auswählens eines Aktors aus den mindestens zwei Aktoren umfasst, wobei der Aktor ausgewählt wird, wenn das zweite Kommunikationsmodul (3") des Aktors aktiv ist.

6. Verfahren (100) nach Anspruch 4, wobei der Schritt des Auswählens (EC1104) einen Unterschritt des aufeinanderfolgenden Steuerns jedes der Aktoren aus den mindestens zwei Aktoren umfasst, um den Aktor auszuwählen, mit dem im Schritt des Sendens (EC1105) eines drahtlosen Verbindungssignals eine drahtlose Verbindung hergestellt wird.

7. Verfahren (100) nach Anspruch 4, wobei der Schritt des Auswählens (EC1104) einen Schritt des Klassifizierens der Aktoren der mindestens zwei Aktoren gemäß einem Aktor-Näherungsindikator umfasst, wobei der Näherungsindikator durch das dritte Kommunikationsmodul (3) des mobilen Endgeräts (11) mit dem zweiten Kommunikationsmodul (3") jedes Aktors der mindestens zwei Aktoren bestimmt wird.

8. Aktor (1), der dazu konfiguriert ist, einen Steuerungsbefehl von einem mobilen Endgerät (11) zu empfangen, wobei der Aktor (1) ein erstes drahtgebundenes Kommunikationsmodul (3') umfasst, wobei das erste drahtgebundene Kommunikationsmodul (3') dazu konfiguriert ist, über ein drahtgebundenes Netzwerk (14) mit einer drahtgebundenen Steuereinheit (8) zu kommunizieren, wobei der Aktor (1) ein zweites drahtloses Kommunikationsmodul (3") umfasst, wobei das zweite Kommunikationsmodul (3") dazu konfiguriert ist, aktiv oder inaktiv zu sein, wobei der Aktor (1) dazu konfiguriert ist, das zweite Kommunikationsmodul (3") zu aktivieren, wenn das zweite Kommunikationsmodul (3") inaktiv ist, wobei das Aktivieren des zweiten Kommunikationsmoduls (3") durch das Empfangen (EC101) eines Wecksignals ausgelöst wird, das nach einer Aktion (EC101bis, EC801) am Schalter (5) oder an der kabelgebundenen Steuereinheit (8) oder an einem anderen Element des kabelgebundenen Kommunikationsnetzwerks (14), wie z. B. einem Konfigurationstool, das mit einer Netzwerkschnittstelle für seinen Anschluss an das Kommunikationsnetzwerk (14) versehen und an das drahtgebundene Kommunikationsnetzwerk (14) angeschlossen ist, gesendet wird, wobei der Aktor (1) dazu konfiguriert ist, ein Aktivitätssignal (13) zu senden (EC102), wenn das zweite Kommunikationsmodul (3") aktiv ist, wobei das zweite Kommunikationsmodul (3") ferner dazu konfiguriert ist, eine drahtlose Verbindung mit einem mobilen Endgerät (11) herzustellen, das mit einem anderen drahtlosen Kommunikationsmodul (3) ausgestattet ist, wobei das zweite Kommunikationsmodul (3") ferner dazu konfiguriert ist, ein Einstellsignal für den Aktor (1) vom mobilen Endgerät (11) zu empfangen, wenn die drahtlose Verbindung mit dem mobilen Endgerät (11) hergestellt ist.

9. Aktor (1) nach dem vorhergehenden Anspruch, wobei der Aktor (1) ferner einen Schalter (5) umfasst, der mit dem zweiten Kommunikationsmodul (3") verbunden ist, wobei das zweite Kommunikationsmodul (3") dazu konfiguriert ist, wenn es inaktiv ist, ein Wecksignal zu empfangen und nach dem Empfangen des Wecksignals aktiv zu sein, wobei das Wecksignal nach einer Aktion (EC101) am Schalter (5) empfangen wird.

10. Anordnung, die mindestens einen Aktor (1) nach einem der Ansprüche 8 oder 9 und ein mobiles Endgerät (11) umfasst, das dazu konfiguriert ist, den mindestens einen Aktor (1) zu steuern, wobei das mobile Endgerät (11) dazu konfiguriert ist, das Aktivitätssignal (13) zu empfangen und eine drahtlose Verbindung mit dem drahtlosen Kommunikationsmodul (3") herzustellen und, wenn die drahtlose Verbindung mit dem Kommunikationsmodul (3") hergestellt ist, ein Einstellsignal für den mindestens einen Aktor (1) zu senden.

## Claims

1. A method (100) for controlling at least one actuator (1), the at least one actuator (1) being connected via a wired network (14) to a wired control unit (8) configured to emit control, or setting, or wake-up signals intended for the at least one actuator (1), the at least one actuator comprising a first wired communication module (3'), the first wired communication module (3') being configured to communicate with the wired control unit (8) via the wired network (14), the at least one actuator (1) comprising a second wireless communication module (3"), the second communication module (3") being configured to be active or inactive, and a switch (5), connected to the second communication module (3"), the method comprising the following steps implemented by the actuator (1):
- if the second communication module (3") is inactive, activation of the second communication module (3") triggered by the reception (EC101) of a wake-up signal emitted following an action (EC101bis, EC801) on the switch (5) or on the wired control unit (8) or on another element of the wired communication network (14), such as a configuration tool, provided with a network interface for its connection to the communication network (14) and connected to the wired communication network (14),
- emission (EC102) by the actuator (1) of an activity signal;
- reception (EC104) by the second communication module (3") of a connection signal received from a third communication module (3) of a mobile terminal (11);
- establishment (EC104bis) of a wireless connection with the mobile terminal (11);
- reception (EC105) of a signal for setting the at least one actuator (1) originating from the mobile terminal (11).

2. The method (100) according to claim 1, **characterized in that** the action (EC801) on the wired control unit (8) is exerted directly on the wired control unit (8), or results from an action on another element of the wired communication network (14) configured to communicate with the wired control unit (8).

3. A method (1100) for controlling at least one actuator (1), the at least one actuator (1) being connected via a wired network (14) to a wired control unit (8) configured to emit control or setting signals or wake-up signals intended for the at least one actuator (1), the at least one actuator comprising a first wired communication module (3'), the first wired communication module (3') being configured to communicate with the wired control unit (8) via the wired network (14), the at least one actuator (1) comprising a second wireless communication module (3"), the second communication module (3") being configured to be active or inactive, and a switch (5) connected to the second communication module (3"), the method comprising the following steps implemented by a mobile terminal (11) comprising a third communication module (3), the third communication module (3) being a wireless communication module:
- reception (EC1103), by the third communication module (3) of the mobile terminal (11), of an activity signal emitted by the actuator (1) whose the second communication module (3") is active;
- emission (EC1105) by the third communication module (3), of a wireless connection signal, to establish a wireless connection with the second communication module (3");
- emission (EC1 106) by the mobile terminal (11) of a signal for setting the at least actuator (1).

4. The method (1100) according to claim 3, wherein the at least one actuator (1) comprises at least two actuators, the method comprising the following step:
- selection (EC1 104) on the mobile terminal (11) of an actuator (1) amongst the at least two actuators.

5. The method (1100) according to claim 4, wherein the selection step (EC1104) comprises a substep of selecting an actuator from amongst the at least two actuators, the actuator being selected if the second communication module (3") of said actuator is active.

6. The method (1100) according to claim 4, wherein the selection step (EC1104) comprises a substep of successive control of each of the actuators of the at least two actuators in order to select the actuator with which a wireless connection is established at the step of transmitting (EC1105) a wireless connection signal.

7. The method (1100) according to claim 4, wherein the selection step (EC1104) comprises a step of classifying the actuators of the at least two actuators according to an actuator proximity indicator, the proximity indicator being determined by the third communication module (3) of the mobile terminal (11) with the second communication module (3") of each actuator of the at least two actuators.

8. An actuator (1) configured to receive a command from a mobile terminal (11), the actuator (1) comprising a first wired communication module (3'), the first wired communication module (3') being configured to communicate with a wired control unit (8) via a wired network (14), the actuator (1) comprising a second wireless communication module (3"), the second communication module (3") being configured to be active or inactive, the actuator (1) being configured to emit (EC102), when the second communication module (3") is active, an activity signal (13), the second active communication module (3") being further configured to establish a wireless connection, with a mobile terminal (11) provided with another wireless communication module (3), the second communication module (3") being further configured, when the wireless connection with the mobile terminal (11) is established, to receive, from the mobile terminal (11), an actuator (1) setting signal.

9. The actuator (1) according to the preceding claim, the actuator (1) further comprising a switch (5) connected to the second communication module (3"), the second communication module (3") being configured, when it is inactive, to receive a wake-up signal and to be active after reception of said wake-up signal, said wake-up signal being received following an action (EC101) on the switch (5).

10. A mobile terminal (11) configured to control an actuator (1), the actuator (1) comprising a wireless communication module, (3"), the communication module (3") being configured to be active or inactive, the actuator (1) being configured to emit an activity signal (13) when the communication module (3") is active, the mobile terminal (11) being configured to receive the activity signal (13) and to establish a wireless connection with the wireless communication module, (3"), and when the wireless connection with the communication module (3") is established, to emit an actuator (1) setting signal.
A set comprising at least one actuator (1) according to any of claims 8 and 9, and a mobile terminal (11) according
